# EUROPEAN PATENT APPLICATION

(11) **EP 0 976 322 A2**
(43) Date of publication of application: **02.02.2000**
(21) Application number: 99305513.6
(22) Date of filing: 12.07.1999
(51) Int. Cl.: A01K 63/00

(54) **An aquarium or water tank**

(30) Priority: 29.07.1998 JP 22869398
(71) Applicant: HONDA ELECTRONICS CO., LTD., Toyohashi-shi, Aichi-ken (JP)
(72) Inventor: Miyamoto, Toshiaki, c/o Honda Electronics Co. Ltd, Toyohashi-shi, Aich-ken (JP)
(74) Representative: Rackham, Stephen Neil

(57) **Abstract**

Algae are prevented from growing on the inside of the side walls (1a, 1b, 1c, 1d) of an aquarium by attaching an ultrasonic vibrator (4) or vibrators (4) to the side wall or walls (1a, 1b, 1c, 1d) and the weak ultrasonic waves are generated from the ultrasonic vibrator or vibrators (4) and coupled to the side walls.

## Description

In prior water tanks or aquaria for breeding and appreciating fishes, since algae propagate and grow under water and adhere on inside surfaces of glass and transparent hard plastics side walls, their inside surfaces thereof become dirty, so that the fish cannot be appreciated through the glass and transparent hard plastics. Also, because the fish in the water tank eat the algae this can impair their flavor if they are to be eaten.

The inside surfaces of glass and transparent hard plastics boards can be cleaned by washing off the algae, but it is troublesome to wash the inside surfaces of glass and transparent hard plastics boards.

It is, therefore, the primary object of the present invention to provide a water tank which prevents the propagation or growth of algae on the inside surfaces of its glass and transparent hard plastics side walls.

According to this invention a water tank for preventing propagation of algae on its inside surfaces comprises an ultrasonic vibrator acoustically coupled to the side walls of glass or transparent hard plastics, and an oscillator for supplying oscillating output to the ultrasonic vibrator, whereby the side walls are vibrated by weak vibration from the ultrasonic vibrator, and, as a result, growth of algae on their inside surfaces is prevented.

Particular embodiments in accordance with this invention will now be described with reference to the accompanying drawings; in which:-
Figure 1 shows a perspective view of a water tank for appreciating fishes in the present invention;
Figure 2 shows perspective view of a water tank for appreciating fishes of another embodiment in the present invention;
Figure 3 shows a perspective view of a water tank for appreciating fishes in a further embodiment of the present invention.

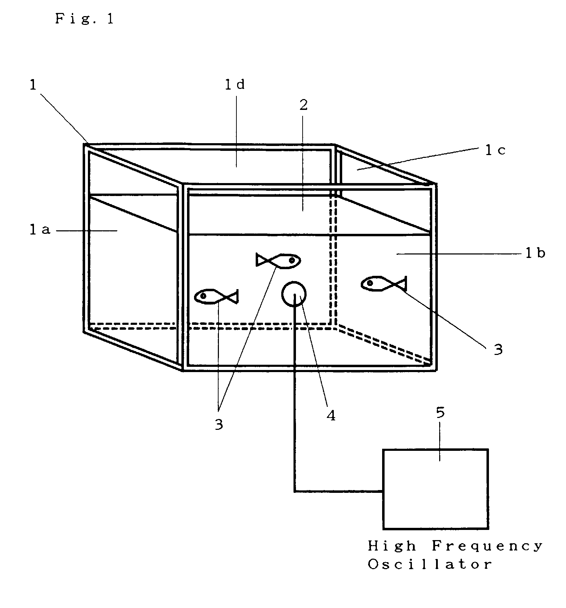

As shown in Figure 1, an aquarium, subsequently called a water tank 1 is formed by four side walls 1a, 1b, 1c and 1a of glass or transparent hard plastic boards. Water 2 is placed in the water tank 1, fishes 3 for cooking or for appreciating swim in the water 2. An ultrasonic vibrator 4 is attached to the outside of the side wall 1a of the water tank 1 and a high frequency oscillator 5 applies an oscillating output to the ultrasonic vibrator 4, whereby the ultrasonic waves are generated from the ultrasonic vibrator 4 and make the side wall 1a of the water tank 1 vibrate.

When ultrasonic waves from the ultrasonic vibrator 4 are strong, algae do not grow on the side wall 1a of the water tank 1, but the fishes 3 for cooking or for appreciating may die as a result of the strong ultrasonic waves. To prevent death of the fishes 3, the ultrasonic waves from the ultrasonic waves from the ultrasonic vibrator 3 are about 1 watt - 10 watt and 20 KHz - 1 MHz.

In the embodiment of the present invention, because the weak ultrasonic waves from the ultrasonic vibrator 4 vibrate the side wall 1a of hard glass and transparent hard plastic board, the algae are not propagated on the inside of the side wall 1a of the water tank 1. Also, because the weak ultrasonic waves provide pleasant vibration to the fishes 3 for cooking or for appreciating, the fishes are active and live long.

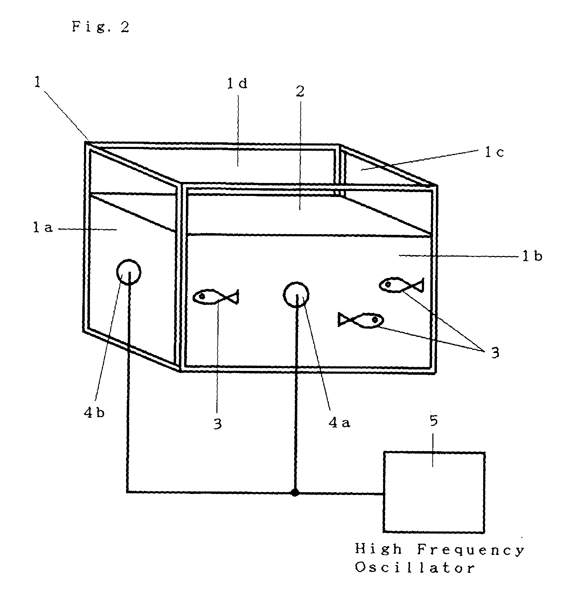

In the second embodiment shown in Figure 2, ultrasonic vibrators 4a and 4b are attached to the outside of side walls 1a and 1b of the glass and transparent hard plastic board of the tank 1.

In the second embodiment, because the weak ultrasonic waves from the ultrasonic vibrator 4a and 4b vibrate the side walls 1a and 1b of glass and transparent hard plastic boards, the algae are not propagated on the inside of the side wall 1a and 1b of the water tank 1. Also, because the weak ultrasonic waves are provided pleasant vibration to the fishes 3 for cooking or for appreciating, the fishes are active and live long.

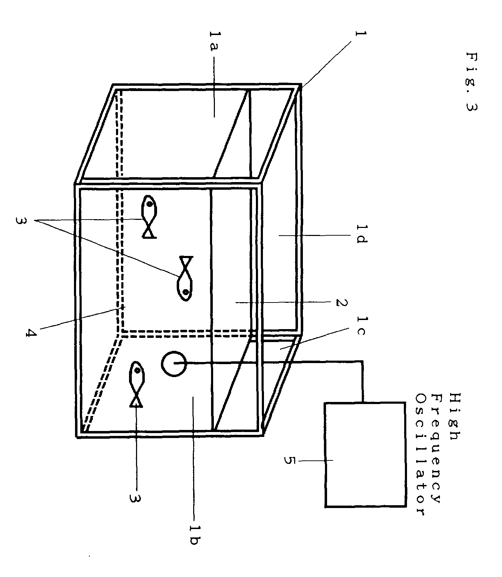

In the third embodiment shown in Figure 3, ultrasonic vibrators 4 are located inside on the bottom of the water tank 1.

In the third embodiment of the present invention, because the weak ultrasonic waves from the ultrasonic vibrator 4 vibrate through the water 2 the side walls 1a, 1b, 1c and 1d of hard glasses and transparent hard plastic boards, the algae are not propagated on the inside of the side wall 1a, 1b, 1c and 1d of the water tank 1. Also, because the weak ultrasonic waves provide pleasant vibration to the fishes 3 for cooking or for appreciating, the fishes are active and live long.

In the second embodiment of Figure 2, though the ultrasonic vibrators 4a dnd 4b are attached to the outsides of the two side walls 1a and 1b of the water tank 1, the ultrasonic vibrators may be attached to the outsides or the insides of the four side walls 1a, 1b, 1c and 1d of the water tank 1 respectively.

In the above embodiments of the present invention, because the ultrasonic vibrator or vibrators are attached to a side wall or walls of the water tank 1 and the weak ultrasonic waves are generated from the ultrasonic vibrator or vibrators, the algae are not propagated on the inside of the side walls and the fishes are active and live long.

## Claims

1. A water tank for preventing propagation of algae on its inside surfaces comprising an ultrasonic vibrator (4) acoustically coupled to the side walls (1a, 1b, 1c, 1d) of glass or transparent hard plastics, and an oscillator (5) for supplying an oscillating output to the ultrasonic vibrator (4), whereby the side walls (1a, 1b, 1c, 1d) are vibrated by weak vibration from the ultrasonic vibrator (4), and, as a result, growth of algae on their inside surfaces is prevented.

2. A water tank for preventing propagation of algae on inside surfaces as set forth in claim 1, wherein the weak ultrasonic waves from the ultrasonic vibrator have a power in a range from 1 watt to 10 watts and a frequency in the range from 20/KHz to 1/MHz.

3. A water tank for preventing propagation of algae on inside surfaces as set forth in claim 1 or 2, wherein one or more ultrasonic vibrators (4) are attached to the inside or outside of the side walls (1a, 1b, 1c, 1d) of the water tank.

4. A water tank for preventing propagation of algae on inside surfaces as set forth in claim 1 or 2, wherein the ultrasonic vibrator (4) is located inside the tank (1) and acoustically coupled to the side walls (1a, 1b, 1c, 1d) by water (2) inside the tank (1).
